# EUROPÄISCHE PATENTSCHRIFT

(11) **EP 0 514 769 B1**
(45) Veröffentlichungstag und Bekanntmachung des Hinweises auf die Patenterteilung: **11.09.1996**
(21) Anmeldenummer: 92108145.1
(22) Anmeldetag: 14.05.1992
(51) Int. Cl.: A01N 43/76, A01N 25/04

(54) **Neue Suspoemulsionen auf Basis Fenoxapropethyl**
New suspo-emulsions based on Fenoxaprop-ethyl
Suspoémulsions nouvelles basées sur fénoxaprop-éthyle

(30) Priorität: 18.05.1991 DE 4116440
(43) Veröffentlichungstag der Anmeldung: 25.11.1992
(73) Patentinhaber: Hoechst Schering AgrEvo GmbH, 13342 Berlin (DE)
(72) Erfinder: Frisch, Gerhard, Dr., W-6393 Wehrheim/Ts. (DE); Maier, Thomas, Dr., W-6000 Frankfurt am Main (DE)

(56) Entgegenhaltungen:
- EP-A- 0 117 999
- EP-A- 0 261 492
- EP-A- 0 330 904
- EP-A- 0 400 585
- WO-A-91/06215
- DE-A- 3 624 910
- GB-A- 2 095 112

## Beschreibung

Die Erfindung betrifft Suspoemulsionen auf Basis Fenoxaprop-ethyl. Suspoemulsionen (SE) verschiedener Arten sind beispielsweise beschrieben in EP-A-0117999, US-Patent 4824663, EP-A-0289356, EP-A-0261492, EP-A-0143099. Eine Übersicht über den neuesten Stand auf dem Gebiet der Suspoemulsionen findet sich einmal in Pestic. Sci. 1990, 29, 451 - 465 (Recent Development in Suspoemulsions, P. Mulqueen et al.) und zum anderen in Pestic. Sci. 1990, 29, 437 - 449 (Trends in the Formulation of Pesticides - An Overview, D. Seaman). Es ist weiterhin bekannt, daß eine Formulierung sehr stark abhängig ist von den in ihr enthaltenen Wirkstoffen. Der Einfluß der Wirkstoffe macht sich dann in der Art und der Zusammensetzung von Tensiden in diesen Mehrphasenformulierungen ganz entscheidend bemerkbar. Ebenso spielt dabei das entsprechende Lösungsmittel für die zu emulgierende Phase, in der ein oder mehrere Wirkstoffe gelöst sind, eine bedeutende Rolle.

Es kann daher nicht immer auf schon vorhandene, bekannte Systeme - wie z. B. oben zitiert - zurückgegriffen werden, um Suspoemulsionen von neuen Wirkstoffen wie z. B. Fenoxaprop-ethyl mit Vertretern aus der neuen Klasse der Sulfonylharnstoffe wie beispielsweise Amidosulfuron oder den schon bekannten Phenylharnstoffderivaten wie beispielsweise Isoproturon, herzustellen. So hat Fenoxaprop-ethyl keine allzu gute Löslichkeit in Phthalsäureestern (EP-A-0177999), dagegen eine sehr gute in aromatischen Lösungsmitteln wie Xylol, Ethylbenzol oder in Aromatengemischen wie z. B. die Lösungsmittel der ®Solvesso-Reihe von Esso. Allerdings ist Fenoxaprop-ethyl in solchen Lösungsmitteln mit Blockpolymeren (EP-A-0261492) oder "graft copolymeren" (EP-A-0289356 bzw. GB-Patent 2026341 A) in dispersionshaltigem Wasser nicht besonders stabil emulgierbar.
Aus EP-A-0400585 sind Emulsionen (EW) von Fenoxaprop-ethyl bekannt, die eine Kombination aus einem diphosphorylierten EO-PO-EO-Blockcopolymeren und C₁₀-C₁₃-Fettalkoholpolyglykolether enthalten. Aus WO-A-91/0615 sind wasseffreie emulgierbare Konzentrate bekannt, die C₁₂-C₁₈-Fettalkoholpolyglykolether enthalten.

Es wurde nun überraschenderweise gefunden, daß sich mit Hilfe einer bestimmten Lösungsmittel- und Tensidkombination lagerstabile und anwendungstechnisch einwandfreie Suspoemulsionen von Fenoxaprop-ethyl mit Herbiziden aus der Sulfonylharnstoff-Reihe, beispielsweise Amidosulfuron, oder aus der Phenylharnstoff-Reihe,beispielsweise Isoproturon herzustellen. Im Falle des Amidosulfuron wird darüber hinaus nahezu kein chemischer Abbau des Wirkstoffes beobachtet, obwohl dies aufgrund der chemischen Struktur erwartet werden könnte. Phenylharnstoff-Derivate, wie Isoproturon, sind in wäßrigen Dispersionen stabil. Diesen Suspoemulsionen können auch Safener zugesetzt werden. Dies gilt auch besonders für Fenoxaprop-ethyl, wenn es beispielsweise mit dem Safener Ethyl-1-(2,4-dichlorphenyl)-5-trichlormethyl-(1H)-1,2,4-triazol-3-carboxylat (EP-A-0174562) kombiniert in der organischen Phase gelöst ist. Zwischen Safener und Fenoxaprop-ethyl finden im beschriebenen System keine Interaktionen statt, die negative Auswirkungen auf Stabilität und Wirkung des Systems haben.

Die Erfindung betrifft daher Suspoemulsionen, die Fenoxaprop-ethyl, mindestens einen herbiziden Wirkstoff aus der Sulfonylharnstoff-Reihe und/oder aus der Phenylharnstoff-Reihe, ein aromatisches Lösungsmittel oder Lösungsmittelgemisch und eine Tensid-Kombination aus ethoxylierten Tristyrylphenol und ethoxyliertem sterisch modifizierten Synthesealkohol einer mittleren Kettenlänge von C₁₃, welche jeweils phosphatiert und mit Alkali oder Amin neutralisiert sein können, enthalten.

Fenoxaprop-ethyl kann als Stereoisomerengemisch (z. B. als Racemat) oder in Form des D(+)-Isomeren Fenoxaprop-P-ethyl eingesetzt werden.

Als Herbizide aus der Sulfonylharnstoff-Reihe kommen in Frage Pyrimidin-oder Triazinylaminocarbonyl-[benzol-, pyridin-, pyrazol-, thiophen- und (alkylsulfonyl)alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)alkylamino-Teil sind Alkyl, Alkoxy, Halogen, Nitro, Alkoxycarbonyl, Aminocarbonyl, Alkylaminocarbonyl, Dialkylaminocarbonyl, Alkoxyaminocarbonyl, Alkyl, Alkoxyaminocarbonyl, Haloalkoxy, Haloalkyl, Alkylcarbonyl, Alkoxyalkyl, (Alkansulfonyl)alkylamino.

Geeignete Sulfonylharnstoffe sind beispielsweise
1) Phenyl- und Benzylsulfonylharnstoffe und verwandte Verbindungen, z.B.
   1-(2-Chlorphenylsulfonyl)-3-(4-methoxy-6-methyl-1,3,5-triazin-2-yl)-harnstoff (Chlorsulfuron),
   1-(2-Ethoxycarbonylphenylsulfonyl)-3-(4-chlor-6-methoxypyrimidin-2-yl)-harnstoff (Chlorimuron-ethyl),
   1-(2-Methoxyphenylsulfonyl)-3-(4-methoxy-6-methyl-1,3,5-triazin-2-yl)-harnstoff (Metsulfuron-methyl),
   1-(2-Chlorethoxy-phenylsulfonyl)-3-(4-methoxy-6-methyl-1,3,5-triazin-2-yl)-harnstoff (Triasulfuron),
   1-(2-Methoxycarbonyl-phenylsulfonyl)-3-(4,6-dimethyl-pyrimidin-2-yl)-harnstoff (Sulfometuron-methyl),
   1-(2-Methoxycarbonylphenylsulfonyl)-3-(4-methoxy-6-methyl-1,3,5-triazin-2-yl)-3-methylharnstoff (Tribenuron-methyl)
   1-(2-Methoxycarbonylbenzylsulfonyl)-3-(4,6-dimethoxy-pyrimidin-2-yl)-harnstoff (Bensulfuron-methyl)
   1-(2-Methoxycarbonylphenylsulfonyl)-3-(4,6-bis-(difluormethoxy)-pyrimidin-2-yl)-harnstoff (Primisulfuron-methyl),
   3-(4-Ethyl-6-methoxy-1,3,5-triazin-2-yl)-1-(2,3-dihydro-1,1-dioxo-2-methylbenzo[b]thiophen-7-sulfonyl)-harnstoff (s. EP-A-79683),
   3-(4-Ethoxy-6-ethyl-1,3,5-triazin-2-yl)-1-(2,3-dihydro-1,1-dioxo-2-methylbenzo[b]thiophen-7-sulfonyl)-harnstoff (s. EP-A-79683),
2) Thienylsulfonylharnstoffe, z.B.
   1-(2-Methoxycarbonylthiophen-3-yl)-3-(4-methoxy-6-methyl-1,3,5-triazin-2-yl)-harnstoff (Thifensulfuron-methyl),
3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)-harnstoff (Pyrazosulfuron-methyl), Methyl-3-chlor-5-(4,6-dimethoxypyrimidin-2-ylcarbamoylsulfamoyl)-1-methyl-pyrazol-4-carboxylat (s. EP-A-282613),
4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und Strukturanaloge (s. EP-A-0131258 und Z. Pfl. Krankh. Pfl. Schutz, Sonderheft XII, 489-497 (1990)),
5) Pyridylsulfonylharnstoffe, z.B.
   1-(3-N,N-Dimethylaminocarbonylpyridin-2-yl-sulfonyl)-3-(4,6-dimethoxypyrimidin-2-yl)-harnstoff (Nicosulfuron),
   1-(3-Ethylsulfonylpyridin-2-yl-sulfonyl)-3-(4,6-dimethoxy-pyrimidin-2-yl)-harnstoff (DPX-E 9636, s. Brighton Crop Prot. Conf. - Weeds - 1989, S. 23 ff.),
   Pyridylsulfonylharnstoffe, wie sie in den deutschen Patentanmeldungen P 4000503.8 (HOE 90/F 006) und P 4030577.5 (HOE 90/F 293) beschrieben sind, vorzugsweise solche der Formel I oder deren Salze, 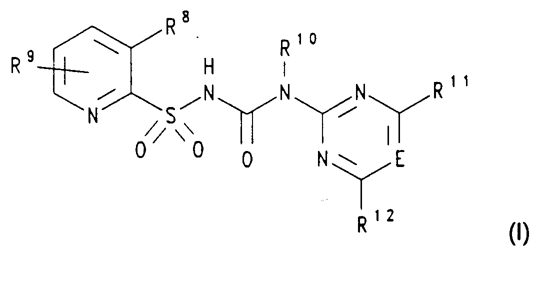
   worin
   - E: CH oder N, vorzugsweise CH,
   - R⁸: Iod oder NR¹³R¹⁴,
   - R⁹: Wasserstoff, Halogen, Cyano, (C₁-C₃₎-Alkyl, (C₁-C₃)-Alkoxy, (C₁-C₃)-Haloalkyl, (C₁-C₃)-Haloalkoxy, (C₁-C₃)-Alkylmercapto, (C₁-C₃)-Alkoxy-(C₁-C₃)-alkyl, (C₁-C₃)-Alkoxy-carbonyl, Mono- oder Di-(C₁-C₃)-alkyl-amino, (C₁-C₃)-Alkyl-sulfinyl oder -sulfonyl, SO₂-NR^{a}R^{b} oder CO-NR^{a}R^{b}, insbesondere H,
   - R^{a},R^{b}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder (CH₂)₂-O-(CH₂)₂-,
   - R¹⁰: H oder CH₃,
   - R¹¹: Halogen, (C₁-C₂)-Alkyl, (C₁-C₂)-Alkoxy, (C₁-C₂)-Haloalkyl, vorzugsweise CF₃, (C₁-C₂)-Haloalkoxy, vorzugsweise OCHF₂ oder OCH₂CF₃,
   - R¹²: (C₁-C₂)-Alkyl, (C₁-C₂)-Haloalkoxy, vorzugsweise OCHF₂, oder (C₁-C₂)-Alkoxy, und
   - R¹³: (C₁-C₄)-Alkyl und R¹⁴ (C₁-C₄)-Alkylsulfonyl oder R¹³ und R¹⁴ gemeinsam eine Kette der Formel -(CH₂)₃SO₂- oder -(CH₂)₄SO₂- bedeuten, z.B. 3-(4,6-Dimethoxypyrimidin-2-yl)-1-(3-N-methylsulfonyl-N-methylaminopyridin-2-yl)-sulfonylharnstoff,
6) Alkoxyphenoxysulfonylharnstoffe, wie sie in EP-A-0342569 beschrieben sind, vorzugsweise solche der Formel II oder deren Salze, 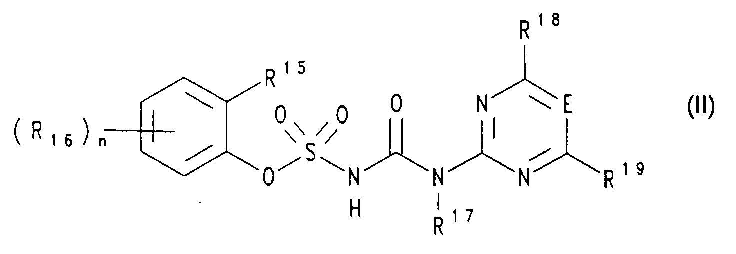 worin
   - E: CH oder N, vorzugsweise CH,
   - R¹⁵: Ethoxy, Propoxy oder Isopropoxy,
   - R¹⁶: Wasserstoff, Halogen, Nitro, CF₃, CN, (C₁-C₄)-Alkyl, (C₁-C₄)-Alkoxy, (C₁-C₄)-Alkylmercapto oder (C₁-C₃)-Alkoxy-carbonyl, vorzugsweise in 6-Position am Phenylring,
   - n: 1, 2 oder 3, vorzugsweise 1,
   - R¹⁷: Wasserstoff, (C₁-C₄)-Alkyl oder (C₃-C₄)-Alkenyl,
   - R¹⁸,R¹⁹: unabhängig voneinander Halogen, (C₁-C₂)-Alkyl, (C₁-C₂)-Alkoxy, (C₁-C₂)-Haloalkyl, (C₁-C₂)-Haloalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylharnstoff,
   und andere verwandte Sulfonylharnstoffderivate und Mischungen daraus. Bevorzugt sind Amidosulfuron und/oder Isoproturon.

Geeignete Phenylharnstoffderivate sind beispielsweise Isoproturon, Diuron, Chlortoluron, Monolinuron, Linuron, Neburon, Monuron, Fluometuron, Fenuron, Siduron, Terbuthuron, Chlorbromuron, Tetrafluoron.

Der Gehalt an Fenoxaprop-ethyl beträgt vorzugsweise 0,1 bis 20 Gew.-%, insbesondere 0,2 bis 10 Gew.-%.

Der Gehalt an Sulfonylharnstoffderivaten und/oder Phenylharnstoffderivaten, vorzugsweise Sulfondiamid-Derivaten bzw. Isoproturon beträgt im allgemeinen vorzugsweise 0,1 bis 60 Gew.-%, insbesondere 1 bis 45 Gew.-%, wobei insbesondere Amidosulfuron auch in etwas geringeren Mengen (vorzugsweise 0,1 bis 30 Gew.-%, insbesondere 0,2 bis 15 Gew.-%) eingesetzt wird.

Als bevorzugte Lösungsmittelkombination kommen aromatische Lösungsmittel, die von Benzol abgeleitet sind, wie Xylol, Mesitylen, Indan, Diisopropylbenzol und höhere Homologe sowie Lösungsmittel aus der ®Solvesso-Reihe von Esso oder ein Gemisch der genannten Lösungsmittel in Frage. Diesen Lösungsmitteln oder Lösungsmittelgemischen wird vorzugsweise ein natürliches Öl tierischer oder pflanzlicher Herkunft zugesetzt, wobei das Verhältnis Öl zu Aromat 1:1 bis 1:100, vorzugsweise jedoch 1:4 bis 1:50 betragen kann. Der Zusatz von natürlichen Ölen bringt nicht nur eine Verbesserung der Scherstabilität des Systems, die essentiell für die Herstellung und Lagerung ist, sondern kann auch noch das Penetrationsverhalten steigern. Bevorzugt ist der Zusatz eines Pflanzenöls wie Rapsöl. Der Gesamtlösungsmittelanteil beträgt vorzugsweise 2 bis 70 Gew.-%, insbesondere 3 bis 50 Gew.-%.

Als erfindungsgemäße Tensidmischung kommt eine Kombination aus ethoxylierten Tristyrylphenolen und ethoxylierten, sterisch modifizierten Synthesealkohol einer mittleren Kettenlänge C₁₃ (Isotridecylalkohol) in Frage, die auch phosphatiert und mit Alkali oder Aminen neutralisiert sein können. Es werden 0,1 bis 30 Gew.-%, vorzugsweise 0,5 bis 20 Gew.-% der Tensidmischung zugesetzt. Der Ethoxylierungsgrad kann im Fall der Tristyrylphenolderivate zwischen 10 und 40, vorzugsweise jedoch zwischen 14 und 28 liegen. Bei dem Isotridecylalkohol kann der Ethoxylierungsgrad zwischen 2 und 20, vorzugsweise zwischen 4 und 14 liegen. Die Tristyrylphenolderivate werden beispielsweise unter den Handelsnamen ®Soprophor BSU, ®Soprophor 3D33, ®Soprophor FL, ®Soprophor CY/8, ®Soprophor S/25, ®Soprophor FL/60, ®Soprophor FLK (Rhone Poulenc), Hoe S 3474, Hoe S 3475, Hoe S 3775 vertrieben; die Isotridecylalkoholderivate der ®Genapol X-Reihe (Hoechst). Das Verhältnis von ethoxylierten Tristyrylphenol- zu ethoxylierten Isotridecylalkoholderivaten beträgt 25:1 bis 1: 35, vorzugsweise jedoch 4:1 bis 1:8.

Formulierungen, die nur Tristyrylphenolderivate enthalten, also nicht die erfindungsgemäße Tensidmischung, sind im vorliegenden Fall nicht scherstabil und neigen sehr stark zu Agglomeration (siehe Beispiele).

Ein weiterer nicht zu erwartender Vorteil ist darin zu sehen, daß mittels dieser Tensidkombination eine deutliche Verbesserung der biologischen Wirkung einhergeht. Versuche haben gezeigt (Tab. II), daß beispielsweise im Falle der Kombination Isoproturon:Fenoxaprop-ethyl, Formulierungen mit obiger Tensidmischung deutlich besser waren als vergleichbare Tankmixturen mit den handelsüblichen Einzelformulierungen bzw. wenn beispielsweise ethoxylierter Isotridecylalkohol gegen ähnliche Netzmittel wie ®Genapol LRO ausgetauscht wurde.

Die erfindungsgemäßen Zubereitungen können als zusätzliches Tensid, das die Dispergiereigenschaften der fest suspendierten Partikel zu verbessern hilft, aber nicht essentiell ist, ein Dodecyl- oder Tridecylbenzolsulfonat in einem Anteil von 0,01 - 12 Gew.-% enthalten. So kann beispielsweise ®Maranil (Dodecylbenzolsulfonat-Na-Salz) von Henkel als Paste oder Pulver eingesetzt werden.

Als zusätzliche Tenside kommen weiterhin diejenigen Polyacrylsäurederivate in Frage, wie sie beispielsweise unter den Handelsnamen ®Sokalan CP10 (BASF), der ®Geropon-Reihe (HB, DA, DG) (Rhone Poulenc) bzw. ®Dispersant-Reihe (Rhone Poulenc) oder der ®Degapas-Reihe (Degussa) zu erhalten sind.

Bei ®Sokalan CP10 handelt es sich um ein modifiziertes Na-Polyacrylat mit niedriger molarer Masse, das nach einem speziellen Polymerisationsverfahren hergestellt wird (BASF Techn. Info TI/P 3039 d von 1988.)

Bei den ®Geropon-Typen HB, DA und DG bzw. ®Dispersant HB und FB handelt es sich gemäß Rhone-Poulenc-Datenblatt von 1979 bzw. 1989 um Alkalipolyacrylate, die sowohl in flüssiger wie fester Form angeboten werden.

Auch bei der ®Degapas-Reihe handelt es sich um Alkali- bzw. Ammoniumsalze von Polyacrylsäurederivaten.

Weiterhin können noch zusätzlich bis zu 25 Gew.-%, vorzugsweise bis zu 15 Gew.-% handelsüblicher Hilfsmittel zugesetzt werden, wie Netzmittel, Dispergiermittel, Entschäumer, Verdicker, Konservierungsmittel und Frostschutzmittel.

Als zusätzliche Netz- und Dispergiermittel kommen beispielsweise Tributylphenolpolyglykolether, wie die ®Sapogenat T-Marken (Hoechst) oder Nonylphenolpolyglykolether, wie die ®Arkopal N-Marken (Hoechst) in Frage.

Geeignete Entschäumer sind beispielsweise solche auf Siliconbasis wie aus der ®Silcolapse-Reihe (Rhone Poulenc), SE 39 oder Antischaummittel SH (Wacker).

Verdickungsmittel können anorganischer oder organischer Natur sein; sie können auch kombiniert werden. Geeignet sind z. B. solche auf Aluminium-, Xanthan-, Methylcellulose-, Polysaccharid-, Erdalkalisilikat-, Gelatine- und Polyvinylalkohol-Basis, wie beispielsweise ®Bentone EW, ®Veegum, ®Rhodopol 23 oder ®Kelzan S.

Wenn nötig, finden Konservierungsmittel, beispielsweise auf Formaldehyd-, Benzoesäure- und Triphenylzinn-Basis Verwendung, wie z.B. ®Kobate C.

Weiterhin können auch Frostschutzmittel, wie Harnstoff, Salze, Polyole (z. B. Glykol, Propylenglykol oder Glycerin) oder Zucker zugesetzt werden.

Die Erfindung betrifft weiterhin ein Verfahren zur Bekämpfung von unerwünschtem Pflanzenwuchs, der dadurch gekennzeichnet ist, daß man eine erfindungsgemäße Zubereitung auf Pflanzen, Pflanzensamen oder die Anbaufläche appliziert.

Bei der Herstellung von den erfindungsgemäßen Suspoemulsionen geht man zweckmäßigerweise von den Einzeldispersionen der dispergierten Wirkstoffe aus wie beispielsweise im Falle der Phenylharnstoffderivate wie z. B. Linuron, Isoproturon, Diuron und Chlortoluron bzw. Gemische derselben verwendet werden. Die Wirkstoffe werden als Fertigformulierungen mit den üblichen Formulierungshilfsmitteln wie sie z. B. in EP-A-0022925, EP-A-0110174 und der deutschen Patentanmeldung P 3538247.3 beschrieben sind, eingesetzt. Ein inniges Vermischen der Suspoemulsion kann beispielsweise durch Naßvermahlung erfolgen.

Ebenso geht man auch im Falle der Sulfonylharnstoffderivate wie z. B. Amidosulfuron von den wäßrigen Dispersionen aus, wie in der deutschen Patentanmeldung P 4116441.5 (HOE 91 /F 151) vorgeschlagen worden ist. Die Zusammenführung der wäßrigen Dispersionsphase mit der organischen Wirkstofflösungsphase kann beispielsweise gemäß EP-A-0130370 erfolgen.

Das Gewichtsverhältnis wäßriger zu organischer Phase kann 1:1,5 bis 50:1 betragen, vorzugsweise jedoch 1:1 bis 35:1.

In den nachfolgenden Tabellen I a und I b sind Beispiele für die erfindungsgemäßen neuen Suspoemulsionen aufgelistet.

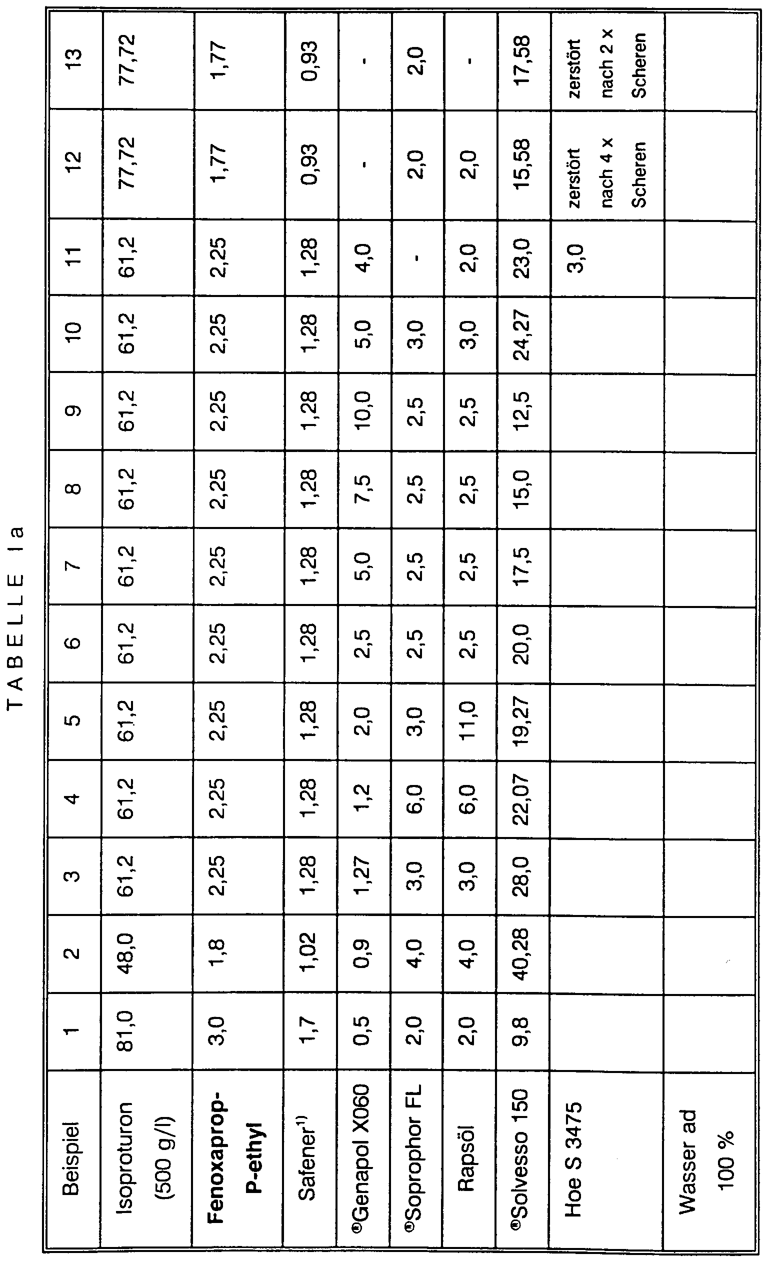

**TABELLE Ib**

| Beispiel | 14 | 15 | 16 | 17 | 18 | 19 | 20 | 21 | 22 | 23 |
|---|---|---|---|---|---|---|---|---|---|---|
| Amidosulfuron | 3,26 | 3,26 | 3,23 | 3,4 | 3,6 | 3,2 | 3,2 | 3,2 | 3,5 | 3,5 |
| Fenoxaprop-P-ethyl | 7,13 | 7,13 | 7,06 | 7,3 | 6,92 | 6,92 | 7,0 | 7,0 | 8,0 | 8,0 |
| Safener¹⁾ | | | | | 3,06 | 3,06 | 3,1 | 3,1 | 3,7 | 3,7 |
| ®Solvesso 150 | 32,87 | 32,87 | 32,94 | 33,43 | 22,02 | 22,0 | 22,0 | 22,0 | 25,5 | 25,5 |
| Rapsöl | 5,0 | 5,0 | 5,0 | 5,0 | 4,0 | 4,0 | 4,0 | 4,0 | 4,0 | 4,0 |
| ®Soprophor BSU | 5,0 | 5,0 | | | 4,0 | | | 4,0 | | |
| ®Soprophor FL | | | 5,0 | | | 4,0 | 4,0 | | | 4,0 |
| Hoe S 3474 | | | | 5,0 | | | | | 4,5 | |
| ®Sokalan CP10 | 1,27 | 1,27 | 1,27 | 1,3 | 1,3 | 1,3 | 1,3 | 1,3 | 1,5 | 1,7 |
| Glycerin | 1,0 | 2,0 | 1,0 | 1,02 | 1,0 | 1,0 | 2,0 | 1,0 | 2,0 | 1,0 |
| ®Maranil A | 0,25 | 0,5 | 0,5 | 0,5 | 0,5 | 0,25 | 0,5 | 0,25 | 0,25 | 0,5 |
| ®Darvan Nr.3 | 0,127 | 0,127 | 0,13 | 0,13 | 0,13 | 0,13 | 0,13 | 0,13 | 0,13 | 0,13 |
| SE 39 | 0,127 | 0,127 | 0,13 | 0,13 | 0,13 | 0,13 | 0,13 | 0,13 | 0,13 | 0,13 |
| ®Silcalaspe 5020 | 0,127 | 0,127 | 0,127 | 0,127 | 0,127 | 0,13 | 0,13 | 0,13 | 0,13 | 0,13 (Forts.) |
| ®Rhodopol 23 | 0,025 | 0,025 | 0,025 | 0,025 | 0,025 | 0,025 | 0,03 | 0,025 | 0,025 | 0,025 |
| ®Kobate C | 0,013 | 0,013 | 0,013 | 0,013 | 0,013 | 0,013 | 0,015 | 0,013 | 0,013 | 0,013 |
| Wasser ad 100 % | | | | | | | | | | |

| | | | | | | | | | | |
|---|---|---|---|---|---|---|---|---|---|---|
| ¹⁾ Ethyl-1-(2,4-dichlorphenyl)-5-trichlormethyl-(1H)-1,2,4-triazol-3-carboxylat ®Darvan Nr.3 ist das Natriumsalz einer polymeren Benzoylalkylsulfonsäure | | | | | | | | | | |

**TABELLE II**

| Biologische Vergleichsversuche | | |
|---|---|---|
| | Herbizide Wirkung gegen Flughafer | |
| Tankmix Fenoxaprop-P-ethyl + Isoproturon 500 g/l | (0,5 + 1 l/ha) | Standard |
| Beispiel 7 | (1,25 l/ha) | + (besser als Standard) |
| Beispiel 9 | (1,25 l/ha) | + + (deutlich besser als Standard) |

## Patentansprüche (Patentansprüche für folgende(n) Vertragsstaat(en): AT, BE, CH, DE, DK, FR, GB, GR, IT, LI, NL, PT, SE)

1. Suspoemulsion, enthaltend Fenoxaprop-ethyl, mindestens einen herbiziden Wirkstoff aus der Sulfonylharnstoff-Reihe und/oder Phenylharnstoff-Reihe, ein aromatisches Lösungsmittel oder Lösungsmittelgemisch und eine Tensid-Kombination aus ethoxyliertem Tristyrylphenol und ethoxyliertem sterisch modifiziertem Synthesealkohol einer mittleren Kettenlänge von C₁₃, welche jeweils phosphatiert und mit Alkali oder Amin neutralisiert sein können.

2. Zubereitung gemäß Anspruch 1, enthaltend 0,1 bis 20 Gew.-% Fenoxaprop-ethyl als Stereoisomerengemisch oder als D(+)-Isomer und 0,1 bis 60 Gew.-% mindestens eines herbiziden Wirkstoffs aus der Sulfonylharnstoff-Reihe und/oder Phenylharnstoff-Reihe, 2 bis 70 Gew.-% eines aromatischen Lösungsmittels oder Lösungsmittelsgemisches und 0,1 bis 30 Gew.-% der im Anspruch 1 definierten Tensid-Kombination.

3. Zubereitung gemäß Anspruch 1 oder 2, welche ein Lösungsmittelgemisch aus einem aromatischen Lösungsmittel und einem natürlichen Öl tierischer oder pflanzlicher Herkunft enthält.

4. Zubereitung gemäß einem der Ansprüche 1 bis 3, zusätzlich enthaltend ein weiteres Tensid und/oder übliche Hilfsmittel aus der Reihe der Netzmittel, Dispergiermittel, Entschäumer, Verdicker, Konservierungsmittel und Frostschutzmittel.

5. Zubereitung gemäß einem der Ansprüche 1 bis 4, enthaltend Amidosulfuron und/oder Isoproturon.

6. Verfahren zur Herstellung einer Zubereitung gemäß einem der Ansprüche 1 bis 5, dadurch gekennzeichnet, daß man Dispersionen der einzelnen Wirkstoffe zusammengibt und mit den weiteren Bestandteilen der Zubereitung mechanisch vermischt bzw. homogensiert.

7. Verwendung einer Zubereitung gemäß einem der Ansprüche 1 bis 5 zur Bekämpfung unerwünschten Pflanzenwuchs.

8. Verfahren zur Bekämpfung von unerwünschtem Pflanzenwuchs, dadurch gekennzeichnet, daß man eine Zubereitung gemäß einem der Ansprüche 1 bis 5 auf Pflanzen, Pflanzensamen oder die Anbaufläche appliziert.

## Patentansprüche (Patentansprüche für folgende(n) Vertragsstaat(en): ES)

1. Verfahren zur Herstellung einer Suspoemulsion, enthaltend Fenoxaprop-ethyl, mindestens einen herbiziden Wirkstoff aus der Sulfonylharnstoff-Reihe und/oder Phenylharnstoff-Reihe, ein aromatisches Lösungsmittel oder Lösungsmittelgemisch und eine Tensid-Kombination aus ethoxyliertem Tristyrylphenol und ethoxyliertem sterisch modifiziertem Synthesealkohol einer mittleren Kettenlänge von C₁₃, welche jeweils phosphatiert und mit Alkali oder Amin neutralisiert sein können, dadurch gekennzeichnet, daß man Dispersionen der einzelnen Wirkstoffe zusammengibt und mit den weiteren Bestandteilen der Zubereitung mechanisch vermischt bzw. homogenisiert.

2. Verfahren gemäß Anspruch 1, dadurch gekennzeichnet, daß man eine Zubereitung herstellt, welche 0,1 bis 20 Gew.-% Fenoxaprop-ethyl als Stereoisomerengemisch oder als D(+)-Isomer und 0,1 bis 60 Gew.-% mindestens eines herbiziden Wirkstoffs aus der Sulfonylharnstoff-Reihe und/oder Phenylharnstoff-Reihe, 2 bis 70 Gew.-% eines aromatischen Lösungsmittels oder Lösungsmittelsgemisches und 0,1 bis 30 Gew.-% der im Anspruch 1 definierten Tensid-Kombination enthält.

3. Verfahren gemäß Anspruch 1 oder 2, dadurch gekennzeichnet, daß man eine Zubereitung herstellt, welche ein Lösungsmittelgemisch aus einem aromatischen Lösungsmittel und einem natürlichen Öl tierischer oder pflanzlicher Herkunft enthält.

4. Verfahren gemäß einem der Ansprüche 1 bis 3, dadurch gekennzeichnet, daß man eine Zubereitung herstellt, welche zusätzlich ein weiteres Tensid und/oder übliche Hilfsmittel aus der Reihe der Netzmittel, Dispergiermittel, Entschäumer, Verdicker, Konservierungsmittel und Frostschutzmittel enthält.

5. Verfahren gemäß einem der Ansprüche 1 bis 4, dadurch gekennzeichnet, daß man eine Zubereitung herstellt, welche Amidosulfuron und/oder Isoproturon enthält.

6. Verwendung einer gemäß einem der Ansprüche 1 bis 5 hergestellten Zubereitung zur Bekämpfung unerwünschten Pflanzenwuchs.

7. Verfahren zur Bekämpfung von unerwünschtem Pflanzenwuchs, dadurch gekennzeichnet, daß man eine Zubereitung gemäß einem der Ansprüche 1 bis 5 auf Pflanzen, Pflanzensamen oder die Anbaufläche appliziert.

## Claims (Claims for the following Contracting State(s): AT, BE, CH, DE, DK, FR, GB, GR, IT, LI, NL, PT, SE)

1. A suspoemulsion comprising fenoxaprop-ethyl, at least one herbicidal active compound from the sulfonylurea series and/or phenylurea series, an aromatic solvent or solvent mixture and a surfactant combination of ethoxylated tristyrylphenol and ethoxylated sterically modified synthesis alcohol of average chain length C₁₃, each of which can be phosphated and neutralized with alkali or amine.

2. A formulation as claimed in claim 1, comprising 0.1 to 20 % by weight of fenoxaprop-ethyl as a stereoisomer mixture or as the D(+)-isomer and 0.1 to 60 % by weight of at least one herbicidal active compound from the sulfonylurea series and/or phenylurea series, 2 to 70 % by weight of an aromatic solvent or solvent mixture and 0.1 to 30 % by weight of the surfactant combination defined in claim 1.

3. A formulation as claimed in claim 1 or 2, which comprises a solvent mixture of an aromatic solvent and a naturally occurring oil of animal or vegetable origin.

4. A formulation as claimed in one of claims 1 to 3, which additionally comprises another surfactant and/or customary auxiliaries from the series comprising wetting agents, dispersing agents, foam suppressants, thickeners, preservatives and antifreeze agents.

5. A formulation as claimed in one of claims 1 to 4, comprising amidosulfuron and/or isoproturon.

6. A process for the preparation of a formulation as claimed in one of claims 1 to 5, which comprises bringing together dispersions of the individual active compounds and mixing or homogenizing them mechanically with the other constituents of the formulation.

7. The use of a formulation as claimed in one of claims 1 to 5 for combating undesirable plant growth.

8. A method of combating undesirable plant growth, which comprises applying a formulation as claimed in one of claims 1 to 5 to plants, plant seeds or the cultivation area.

## Claims (Claims for the following Contracting State(s): ES)

1. A process for the preparation of a suspoemulsion comprising fenoxaprop-ethyl, at least one herbicidal active compound from the sulfonylurea series and/or phenylurea series, an aromatic solvent or solvent mixture and a surfactant combination of ethoxylated tristyrylphenol and ethoxylated sterically modified synthesis alcohol of an average chain length of C₁₃, each of which can be phosphated and neutralized with alkali or amine, which comprises bringing together dispersions of the individual active compounds and mixing or homogenizing them mechanically with the other constituents of the formulation.

2. The process as claimed in claim 1, wherein a formulation is prepared which comprises 0.1 to 20 % by weight of fenoxaprop-ethyl as a stereoisomer mixture or as the D(+)-isomer and 0.1 to 60 % by weight of at least one herbicidal active compound from the sulfonylurea series and/or phenylurea series, 2 to 70 % by weight of an aromatic solvent or solvent mixture and 0.1 to 30 % by weight of the surfactant combination defined in claim 1.

3. The process as claimed in claim 1 or 2, wherein a formulation is prepared which comprises a solvent mixture of an aromatic solvent and a naturally occurring oil of animal or vegetable origin.

4. The process as claimed in one of claims 1 to 3, wherein a formulation is prepared which additionally comprises another surfactant and/or customary auxiliaries from the series comprising wetting agents, dispersing agents, foam suppressants, thickeners, preservatives and antifreeze agents.

5. The process as claimed in one of claims 1 to 4, wherein a formulation is prepared which comprises amidosulfuron and/or isoproturon.

6. The use of a formulation prepared as claimed in one of claims 1 to 5 for combating unwanted plant growth.

7. A method of combating unwanted plant growth, which comprises applying a formulation as claimed in one of claims 1 to 5 to plants, plant seeds or the cultivation area.

## Revendications (Revendications pour l'(les) Etat(s) contractant(s) suivant(s): AT, BE, CH, DE, DK, FR, GB, GR, IT, LI, NL, PT, SE)

1. Suspo-émulsion contenant du fénoxaprop-éthyl, au moins une matière active herbicide de la série des sulfonylurées et/ou des phénylurées, un solvant aromatique ou un mélange de solvants aromatiques et une combinaison de tensioactifs constituée d'un tristyrylphénol éthoxylé et d'un alcool de synthèse éthoxylé à modification stérique ayant une longueur moyenne de chaîne en C₁₃, dont chacun peut être phosphaté et neutralisé par un alcali ou une amine.

2. Préparation selon la revendication 1, contenant de 0,1 à 20 % en poids de fénoxaprop-éthyl, sous forme d'un mélange de stéréo-isomères ou de l'isomère D(+), et de 0,1 à 60 % en poids d'au moins une matière active herbicide de la série de sulfonylurées et/ou de la série des phénylurées, de 2 à 70 % en poids d'un solvant aromatique ou d'un mélange de solvants aromatiques, et de 0,1 à 30 % en poids de la combinaison de tensioactifs définie dans la revendication 1.

3. Préparation selon la revendication 1 ou 2, qui contient un mélange de solvants constitué d'un solvant aromatique et d'une huile naturelle d'origine animale ou végétale.

4. Préparation selon l'une des revendications 1 à 3, qui contient en outre un tensioactif additionnel et/ou des substances auxiliaires de la série des mouillants, des dispersants, des antimoussants, des épaississants, des conservateurs et des antigels.

5. Préparation selon l'un des revendications 1 à 4, contenant de l'amidosulfuron et/ou de l'isoproturon.

6. Procédé pour fabriquer une préparation selon l'une des revendications 1 à 5, caractérisé en ce qu'on réunit des dispersions des différentes matières actives, et qu'on les soumet à un mélange mécanique ou à une homogénéisation avec les autres constituants de la préparation.

7. Utilisation d'une préparation selon l'une des revendications 1 à 5, pour maîtriser une croissance indésirable des végétaux.

8. Procédé pour maîtriser une croissance indésirable des végétaux, caractérisé en ce qu'on applique une préparation selon l'une des revendications 1 à 5 sur des végétaux, des semences végétales ou une surface de culture.

## Revendications (Revendications pour l'(les) Etat(s) contractant(s) suivant(s): ES)

1. Procédé pour préparer une suspo-émulsion contenant du fénoxaprop-éthyl, au moins une matière active herbicide de la série des sulfonylurées et/ou des phénylurées, un solvant aromatique ou un mélange de solvants aromatiques et une combinaison de tensioactifs constituée d'un tristyrylphénol éthoxylé et d'un alcool de synthèse éthoxylé à modification stérique ayant une longueur moyenne de chaîne en C₁₃, dont chacun peut être phosphaté et neutralisé par un alcali ou une amine, caractérisé en ce qu'on réunit des dispersions des différentes matières actives, et qu'on les soumet à un mélange mécanique ou à une homogénéisation avec les autres constituants de la préparation.

2. Procédé selon la revendication 1, caractérisé en ce qu'on fabrique une préparation contenant de 0,1 à 20 % en poids de fénoxaprop-éthyl, sous forme d'un mélange de stéréo-isomères ou de l'isomère D(+), et de 0,1 à 60 % en poids d'au moins une matière active herbicide de la série de sulfonylurées et/ou de la série des phénylurées, de 2 à 70 % en poids d'un solvant aromatique ou d'un mélange de solvants aromatiques, et de 0,1 à 30 % en poids de la combinaison de tensioactifs définie dans la revendication 1.

3. Procédé selon la revendication 1 ou 2, caractérisé en ce qu'on fabrique une préparation qui contient un mélange de solvants constitué d'un solvant aromatique d'une huile naturelle d'origine animale ou végétale.

4. Procédé selon l'une des revendications 1 à 3, caractérisé en ce qu'on fabrique une préparation qui contient en outre un autre tensioactif et/ou des substances auxiliaires usuelles de la série des mouillants, des dispersants, des antimoussants, des épaississants, des conservateurs et des antigels.

5. Procédé selon l'une des revendications 1 à 4, caractérisé en ce qu'on fabrique une préparation contenant de l'amidosulfuron et/ou de l'isoproturon.

6. Utilisation d'une préparation fabriquée selon l'une des revendications 1 à 5 pour lutter contre une croissance indésirable des végétaux.

7. Procédé pour maîtriser une croissance indésirable des végétaux, caractérisé en ce qu'on applique une préparation selon l'une des revendications 1 à 5 sur des végétaux, des semences végétales ou une surface de culture.
